# EUROPÄISCHE PATENTANMELDUNG

(11) **EP 0 567 164 A1**
(43) Veröffentlichungstag der Anmeldung: **27.10.1993**
(21) Anmeldenummer: 93110314.7
(22) Anmeldetag: 29.06.1993
(51) Int. Cl.: B29C 47/36, B29C 47/92

(54) **Speicherkopf-Blasformanlage**

(71) Anmelder: Maag Pump Systems AG, CH-8023 Zürich (CH)
(72) Erfinder: Stehr, Roger, Dr.Ing., CH-8180 Bülach (CH); Boelsterli, Urs, Masch. Ing. HTL, CH-8303 Bassersdorf (CH); Hofbauer, Peter, D-82266 Inning (DE); Herrmann, Jürgen, D-82152 Planegg/München (DE)
(74) Vertreter: Troesch Scheidegger Werner AG

(57) **Zusammenfassung**

Um bei einer Speicherkopf-Blasformanlage die Ausgabe gleichbleibender Vorformlinge aus dem Speicherkopf sicherzustellen, wird letzterem (1) ein volumetrisch förderndes Aggregat (15) vorgeschaltet, welches bevorzugterweise durch eine zwischen einem Extruder (14) und dem Speicherkopf (1) geschaltete Zahnradpumpe (15) besteht.

## Beschreibung

Die vorliegende Erfindung betrifft eine Speicherkopf-Blasformanlage nach dem Oberbegriff von Anspruch 1.

Insbesondere zur Herstellung von grossvolumigen, blasgeformten Hohlkörpern aus thermoplastischen Kunststoffen, wie Kunststoffbehälter, Tanks, Fässer etc., finden häufig sog. Speicherkopf-Blasformanlagen Anwendung. Dabei beschickt ein Extruder kontinuierlich einen Speicherkopf mit Kunststoffschmelze. Dem Speicherkopf nachgeschaltet ist ein Blaswerkzeug vorgesehen. Ein im Inneren des Speicherkopfes befindlicher Auspresskolben presst gespeicherte Kunststoffmasse mit definierter Geschwindigkeit aus dem Speicherkopf. Der dadurch erzeugte Vorformling, meist mit Kreisquerschnitt, wird vom Blasformwerkzeug übernommen und erhält durch Aufblasen in der geschlossenen Blasform seine endgültige, u.U. sehr komplexe Form, wie beispielsweise bei PKW-Kraftstofftanks.

Die zum Aufblasen, Kühlen in der Blasform und Entformen notwendige Zykluszeit ist fest vorgegeben und bestimmt den Arbeitstakt der Gesamtanlage und damit auch des Speicherkopfes. Mithin ist der Takt des Auspresskolbens im Speicherkopf zeitlich vorgegeben. Der Auspresskolben im Speicherkopf wird bei verschlossenem Speicherkopfaustritt dadurch rückgetrieben, dass vom Extruder Kunststoffschmelze in eine zwischen Auspresskolben und Speicherkopfaustritt definierte Speicherkammer eingepresst wird. Im Arbeitstakt wird der Auspresskolben extern angetrieben und bei geöffnetem Speicherkopfauslass vorgetrieben.

Weil der Taktbetrieb des Speicherkopfes, wie erwähnt, zeitgesteuert ist, sind die Zeitabschnitte, während welchen bei geschlossenem Speicherkopfaustritt die Speicherkammer unter Anheben des Auspresskolbens gefüllt wird, von definierter Länge. Ausgangsseitig des Extruders sind Durchsatzschwankungen unvermeidlich. Dies führt dazu, dass während den erwähnten Rückholzeitspannen unterschiedliche Kunststoffschmelze-Volumina in die Speicherkammer aufgenommen werden. In den Arbeitstakten des Auspresskolbens führt dies wiederum zum Auspressen unterschiedlicher Schmelzevolumina, was zu Vorformlingen variierender Länge und schliesslich zu nicht vernachlässigbaren Ausschussraten, insbesondere bei komplexeren Fertigteilen, führt.

Die vorliegende Erfindung setzt sich zum Ziel, dieses Problem zu lösen.

Dem Wortlaut des kennzeichnenden Teils von Anspruch 1 folgend, wird dies bei einer Speicherkopf-Blasformanlage eingangs genannter Art dadurch erreicht, dass dem Speicherkopf ein volumetrisch förderndes Aggregat vorgeschaltet ist.

Vorzugsweise wird es sich dabei, dem Wortlaut von Anspruch 2 folgend, um eine Zahnradpumpe handeln.

Dadurch, dass mit dem erfindungsgemäss vorgesehenen Aggregat bei bevorzugtem Einsatz einer Zahnradpumpe, bei deren fixer Drehzahl, das dem Speicherkopf pro Zeiteinheit zugeführte Kunststoffschmelze-Volumen praktisch ideal konstant bleibt, werden mithin in konstant bleibenden, vorgegebenen Rückholzeitabschnitten, während welchen der Auspresskolben im Speicherkopf rückgetrieben wird, gleichbleibend konstante Schmelzevolumina in die Speicherkammer des Speicherkopfes eingespiesen.

Das erfindungsgemässe, streng volumetrische Förderaggregat, wie insbesondere die Zahnradpumpe, fördert bei konstantem Betrieb, d.h. konstanter Drehzahl pro Zeiteinheit, gleiche Volumina in den Speicherkopf. Dadurch werden an der Extruderendstufe bzw. dessen Schneckenspitze unvermeidbare Volumenstromschwankungen, insbesondere beim Einsatz höherer Anteile an Mahlgut, durch das erfindungsgemäss vorgesehene Aggregat bezüglich Auswirkung auf die Volumenstromkonstanz eingangs des Speicherkopfes isoliert. Damit wird bei jedem Arbeitshub des Auspresskolbens ein gleichbleibendes Schmelzevolumen ausgepresst, was zu exakt dimensionierten Vorformlingen und damit optimalen Voraussetzungen zur Realisation geringster Ausschussquoten beim Fertigteil führt.

Die Erfindung wird nachstehend beispielsweise anhand von Figuren erläutert.

Darin zeigen:
- Fig. 1: schematisch einen Vertikalschnitt durch einen bekannten Speicherkopf einer Speicherkopf-Blasformanlage;
- Fig. 2: schematisch eine erfindungsgemässe Speicherkopf-Blasformanlage.

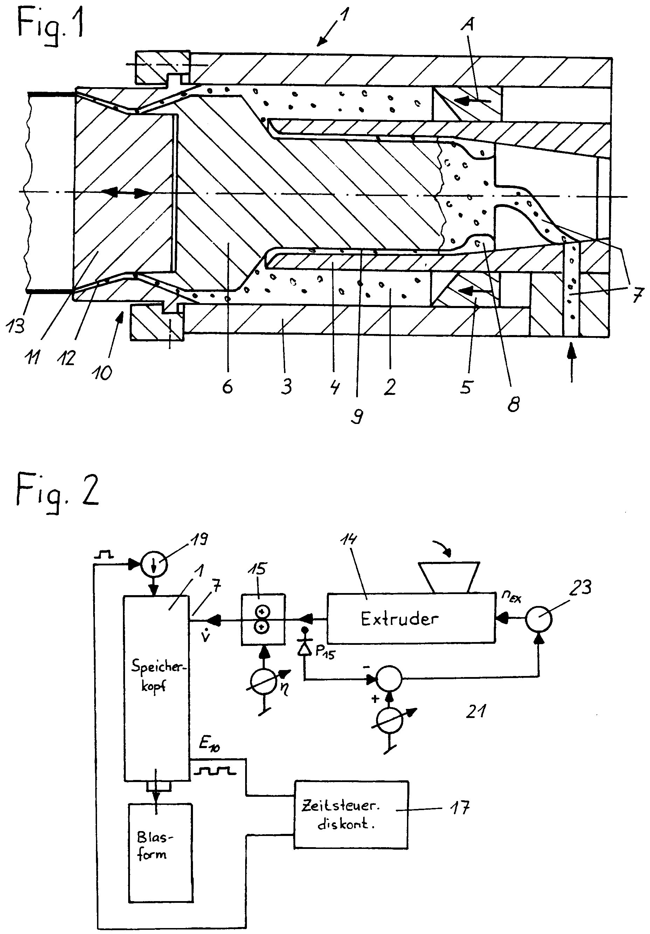

Anhand von Fig. 1 soll vorerst der prinzipielle Aufbau eines an sich bekannten, bei Blasformanlagen eingesetzten Speicherkopfes 1 erläutert werden.

Zwischen einem zylindrischen Mantel 3 und einer Innenhülse 4 wird die Speicherkammer 2 definiert. Am oberen Ende ist sie durch einen ringförmigen Auspresskolben 5 abgeschlossen, welcher in der mit den Pfeilen A angegebenen Richtung durch ein nicht dargestelltes Antriebsorgan angetrieben ist, jedoch in Gegenrichtung als Freilaufkolben arbeitet. Im Zentrum des Speicherkopfes 1 befindet sich eine feststehende Pinole 6. Die Kunststoffschmelze wird über eine Zuleitung 7 in einen Ringkanal 8 und über einen Spalt 9 zwischen Pinole 6 und Hülse 4 nach unten in die Speicherkammer 2 gefördert und hebt den Auspresskolben 5, wie erwähnt, im Rückholzyklus als Freilaufkolben betrieben, an.

Ausgangsseitig des Speicherkopfes 1 ist eine Düse 10 vorgesehen, deren Dorn 11 mittels nicht dargestellter Antriebsmittel angehoben bzw. abgesenkt werden kann. Dadurch wird die Austrittsöffnung 12 geöffnet bzw. verschlossen. Bei geschlossener Düse 10 erfolgt der Rücktrieb des Auspresskolbens 5 durch die eingepresste Kunststoffmasse in Speicherkammer 2, während bei geöffneter Düse 10 die vormals abgespeicherte Kunststoffmasse durch Antrieb des Auspresskolbens 5 in Richtung A ausgepresst wird. Das dabei ausgepresste Kunststoffschmelze-Volumen ist dasselbe, das vormals während der Rücktriebphase des Auspresskolbens 5 im Freilaufbetrieb in die Speicherkammer 2 eingepresst wurde, und weil die Zeitspanne, welche zum Füllen der Speicherkammer 2 und damit Rücktreiben des Auspresskolbens 5 zur Verfügung steht, fest vorgegeben ist, für ein fertigzustellendes Bauteil, hängt das ausgepresste Volumen ausschliesslich vom Kunststoffschmelze-Volumen ab, welches während der Rückholzeitspanne in die Speicherkammer 2 eingepresst wurde.

Schwankt das pro Zeiteinheit über Leitung 7 dem Speicherkopf 1 zugeführte Kunststoffschmelze-Volumen, so führt dies zum Auspressen von Vorformlingen schwankender Länge. Wie erwähnt wurde, lassen sich nicht vernachlässigbare Volumenstromschwankungen ausgangsseitig des vorgesehenen Extruders nicht vermeiden.

In Fig. 2 ist schematisch eine erfindungsgemässe SpeicherkopfBlasformanlage dargestellt, an welcher das erwähnte Problem behoben wird.

Zwischen Extruder 14 und Speicherkopf 1 wird ein volumetrisch förderndes Aggregat zwischengeschaltet, d.h. ein Aggregat, welches pro Zeiteinheit ein Volumen fördert, das in weiten Grenzen unabhängig von seinem Eingangs- und Ausgangsdruck ist. In weitaus bevorzugter Weise, und wie in Fig. 2 dargestellt, wird als volumetrisch förderndes Aggregat eine Zahnradpumpe 15 eingesetzt.

Eine Zeitsteuereinheit 17 steuert Oeffnen und Schliessen der Düse 10 des Speicherkopfes 1, wie schematisch am Steuereingang E₁₀ dargestellt, und in Oeffnungsphasen der Düse 10 den Antrieb 19 für den Arbeitshub des Auspresskolbens 5 gemäss Fig. 1. In den Schliessphasen der Düse 10 vorgegebener, fester Zeitlänge wird, abhängig von ihrer vorgegebenen zeitlichen Länge und von dem ausgangsseitig der Zahnradpumpe pro Zeiteinheit ausgegebenen Volumen, entsprechend dem Volumenstrom V̇ in Funktion der vorgegebenen Betriebsdrehzahl n der Zahnradpumpe, ein immer gleichbleibendes Kunststoffschmelze-Volumen dem Speicherkopf 7 zugeführt.

Bei gleichbleibenden Betriebsbedingungen wird bei konstant gehaltener Zeitsteuerung die Zahnradpumpen-Drehzahl n konstant gehalten eingestellt, um in den zur Verfügung stehenden Rückholzeitspannen das geforderte Schmelzevolumen in die Speicherkammer 2 einzubringen.

Um gegebenenfalls eine noch weitere, ideale Konstanthaltung des Volumenstromes V̇ ausgangsseitig der Zahnradpumpe sicherzustellen, kann gegebenenfalls die Extruderdrehzahl n_{EX} in regelndem Sinne geführt werden, indem beispielsweise der Druck eingangsseitig der Zahnradpumpe p₁₅, gemessen mit einem SOLL-Wert, wie schematisch dargestellt, an einer Vergleichseinheit 21 verglichen wird und nach Massgabe des Vergleichsresultates als Regeldifferenz auf den Antrieb 23 des Extruders 14 eingegriffen wird.

## Patentansprüche

1. Speicherkopf-Blasformanlage zur Herstellung von Körpern aus thermoplastischem Material mit einem Extruder, dem ausgangsseitig ein Speicherkopf nachgeschaltet ist, dadurch gekennzeichnet, dass dem Speicherkopf ein volumetrisch förderndes Aggregat vorgeschaltet ist.

2. Anlage nach Anspruch 1, dadurch gekennzeichnet, dass dem Extruder und dem Speicherkopf, als das Aggregat, eine Zahnradpumpe zwischengeschaltet ist.

3. Anlage nach einem der Ansprüche 1 oder 2, dadurch gekennzeichnet, dass die Extruderdrehzahl geregelt ist, vorzugsweise mittels eines Regelkreises, mit dem Extruderausgangsdruck als gemessene Regelgrösse.
